# EUROPÄISCHE PATENTANMELDUNG

(11) **EP 0 762 083 A1**
(43) Veröffentlichungstag der Anmeldung: **12.03.1997**
(21) Anmeldenummer: 96111855.1
(22) Anmeldetag: 23.07.1996
(51) Int. Cl.: G01D 5/14, G01D 5/16, H02K 1/27

(54) **Magnetischer Positionsgeber**

(30) Priorität: 07.09.1995 DE 19533120
(71) Anmelder: INTERELECTRIC AG, CH-6072 Sachseln (CH)
(72) Erfinder: Teimel, Arnold, 6072 Sachseln (CH)
(74) Vertreter: Grünecker, Kinkeldey, Stockmair & Schwanhäusser Anwaltssozietät

(57) **Zusammenfassung**

Ein magnetischer Positionsgeber weist einen Code-Träger auf. Dieser ist entlang einer Abtastrichtung durch abwechselnd aufeinanderfolgende Nord- und Südpole gebildet.

Um einen Code-Träger für den magnetischen Positionsgeber mit beliebiger Polteilung genau und reproduzierbar herzustellen und gleichzeitig dessen Magnetisierung zu vereinfachen, ist der Code-Träger aus wenigstens zwei zusammengesetzten, entgegengesetzt magnetisierten Einzelpolträgern gebildet, von welchen jeder entlang der Abtastrichtung Polsegmente mit gleicher Magnetisierung aufweist, wobei Polsegmente unterschiedlicher Einzelpolträger ineinander greifen.

Ein entsprechendes Herstellungsverfahren für einen magnetischen Positionsgeber zeichnet sich dadurch aus, daß zuerst wenigstens zwei Einzelpolträger mit entlang der Abtastrichtung beabstandeten Polsegmenten hergestellt werden. Anschließend werden zumindest die Polsegmente eines jeden Einzelpolträgers in einer Magnetisiervorrichtung magnetisiert, wobei Polsegmente unterschiedlicher Einzelpolträger entgegengesetzt magnetisiert werden. Durch Zusammenfügen der Einzelpolträger wird ein Code-Träger hergestellt, wobei abwechselnd Polsegmente eines jeden Einzelpolträgers entlang der Abtastrichtung angeordnet sind und ineinander greifen.

## Beschreibung

Die Erfindung betrifft einen magnetischen Positionsgeber mit einem Code-Träger, welcher entlang einer Abtastrichtung abwechselnd aufeinanderfolgende Nord- und Südpole aufweist sowie ein Verfahren zur Herstellung eines solchen magnetischen Positionsgebers.

Ein solcher magnetischer Positionsgeber wird beispielsweise je nach Form des Code-Trägers als Dreh- oder Längengeber verwendet. Dabei ist dem Code-Träger ein stationärer Magnetsensor zugeordnet, der die sich vorbeibewegenden Nord- und Südpole des Code-Trägers erfaßt und entsprechende Signale abgibt. Diese werden durch eine Auswerteelektronik und mittels eines vorgegebenen Abstands der Nord- und Südpole (Polteilung) in ein Drehwinkel- oder Längensignal umgewandelt. Je feiner die Polteilung ist, desto genauer ist die Positionsbestimmung. Die Abtastung durch den Sensor erfolgt berührungsfrei, wobei ein Abtastspalt zwischen Code-Träger und Sensor vorhanden ist.

Ein bei dem obengenannten magnetischen Positionsgeber eingesetzter Code-Träger wird im wesentlichen in zwei verschiedenen Ausführungsformen hergestellt.

Im ersten Fall werden kunststoffgebundene Ferrite oder andere Magnetwerkstoffe mit relativ niedriger Koerzitivfeldstärke beziehungsweise Energiedichte verwendet. Die Magnetisierung der Magnetwerkstoffe erfolgt in der Regel durch einen Magnetisierkopf, wie er beispielsweise auch bei einem Tonband eingesetzt wird. Durch den Magnetisierkopf wird der Code-Träger entlang der Abtastrichtung in einem bestimmten Abstand unterschiedlich magnetisiert, so daß sich abwechselnd aufeinanderfolgende Nord- und Südpole entlang der Abtastrichtung ergeben. Dabei wird jeder einzelne Pol separat magnetisiert. Die Gleichförmigkeit der herzustellenden Polteilung ist sehr stark von der Welligkeit und Oberflächenrauhigkeit des Code-Trägers abhängig. Insgesamt sind auf diese Weise hergestellte Code-Träger teuer, wobei das Herstellungsverfahren recht zeitintensiv ist.

Im zweiten Fall wird die Polstruktur des Code-Trägers dadurch hergestellt, daß eine Spule gewickelt wird, deren Drahtabstand dem gewünschten Polabstand des Code-Trägers entspricht. Durch einen entsprechenden Stromimpuls durch die Spule sind alle Pole des Code-Trägers herstellbar.

Nachteilig bei einem auf diese Weise hergestellten Code-Träger ist, daß bei kleinerwerdendem Polabstand (höhere Polteilung) der maximal verwendbare Drahtdurchmesser der Magnetisierspule immer kleiner wird. Um eine thermische Überlastung der Magnetisierspule, das heißt deren Zerstörung, zu vermeiden, muß die Energie des Magnetisierimpulses entsprechend reduziert werden. Allerdings führt eine Abnahme der für die Magnetisierung zur Verfügung stehenden Energie dazu, daß nur Materialien mit niedriger Koerzitivfeldstärke magnetisiert werden können.

Weiterhin ist von Nachteil, daß die Gleichförmigkeit der Polteilung durch die Genauigkeit der Herstellung der Magnetisierspule und wie auch im Zusammenhang mit dem ersten Verfahren geschildert sehr stark vom Abstand zwischen der Oberfläche des zu magnetisierenden Code-Trägers und dem Draht der Magnetisierspule bestimmt ist. Bei dem letzten Verfahren ergibt sich als weiterer Nachteil, daß für jede benötigte Anzahl von Polen, beziehungsweise jeden gewünschten Polabstand eine spezielle Magnetisiervorrichtung vorhanden sein muß.

Der Erfindung liegt daher die Aufgabe zugrunde, einen magnetischen Positionsgeber, beziehungsweise ein Verfahren zur Herstellung eines magnetischen Positionsgebers mit den Merkmalen der Oberbegriffe der Ansprüche 1, beziehungsweise 15 dahingehend zu verbessern, daß eine im wesentlichen beliebige Polteilung des Code-Trägers genau und reproduzierbar herstellbar ist, wobei gleichzeitig die Magnetisierung vereinfacht ist.

Diese Aufgabe wird bei dem bekannten magnetischen Positionsgeber, beziehungsweise dem Verfahren zur Herstellung des Positionsgebers durch die entsprechenden kennzeichnenden Merkmale der Ansprüche 1 und 15 gelöst.

Erfindungsgemäß wird der Code-Träger aus wenigstens zwei Einzelpolträgern gebildet. Jeder Einzelpolträger weist eine Anzahl von entlang der Abtastrichtung beabstandeten Polsegmenten auf, die in einer solchen Weise magnetisiert sind, daß Polsegmente unterschiedlicher Einzelpolträger entlang der Abtastrichtung jeweils einen Nord- beziehungsweise einen Südpol aufweisen, so daß jeder Einzelpolträger dem entsprechenden Magnetsensor zur Abtastung des Code-Trägers nur einen bestimmten Magnetpol zuweist. Die entsprechenden entgegengesetzten Magnetpole sind entfernt zur Abtastrichtung angeordnet und werden von dem Magnetsensor nicht erfaßt.

Um entlang der Abtastrichtung ein Aufeinanderfolgen von abwechselnd Nord- und Südpol zu gewährleisten, greifen die Polsegmente der Einzelpolträger ineinander.

Durch die separate Herstellung der Einzelpolträger und deren getrennte Magnetisierung sind die Polsegmente im wesentlichen mit beliebiger Polteilung genau und reproduzierbar herstellbar, wobei jeder Einzelpolträger durch eine entsprechende Magnetisiervorrichtung in einfacher Weise magnetisierbar ist. Es ist natürlich auch möglich, den Code-Träger aus mehr als zwei Einzelpolträgern herzustellen, insbesondere wenn der Code-Träger einen relativ komplexen Aufbau aufweist.

Die Herstellung der Einzelpolträger kann durch verschiedene Techniken erfolgen. Je nach verwendetem Material für die Einzelpolträger sind zum Beispiel Sintertechnik, Spritzgußtechnik, Stanzen oder eine spanende Bearbeitung möglich. Die Genauigkeit und Feinheit der Polteilung hängt dabei im wesentlichen nur von der Genauigkeit und Feinheit der entsprechend verwendeten Herstellungstechnik ab.

Um das Ineinandergreifen der Polsegmente zur Herstellung des Code-Trägers zu vereinfachen, sind Polsegmente entgegengesetzt magnetisierter Einzelpolträger komplementär zueinander ausgebildet. Das heißt, je nach Form des Polsegments des einen Einzelpolträgers sind die Polsegmente des anderen Einzelpolträgers geformt.

Um zu gewährleisten, daß jedes Polsegment dem Magnetsensor einen festen Pol zuweist, erstrecken sich die Polsegmente im wesentlichen senkrecht zur Abtastrichtung und sind ebenfalls senkrecht zur Abtastrichtung magnetisiert.

Bei einem einfachen Ausführungsbeispiel sind die Polsegmente entlang der Abtastrichtung im wesentlichen zahnförmig ausgebildet und Polsegmente entgegengesetzt magnetisierter Einzelpolträger sind auf Lücke angeordnet.

Für eine Längenmessung sind in diesem Zusammenhang die Einzelpolträger kammförmig, wobei die zahnförmigen Polsegmente in Kammlängsrichtung beabstandet zueinander angeordnet sind.

Um einen Drehgeber zur Messung von Drehwinkeln zu realisieren, sind die Einzelpolträger scheibenförmig, wobei die Polsegmente vom Scheibenrand abstehen. In Umfangsrichtung sind die Polsegmente eines jeden Einzelpolträgers beabstandet voneinander angeordnet, um eine entsprechende Lücke zum Eingreifen der Polsegmente des jeweils anderen Einzelpolträgers zu bilden. Dabei können die Polsegmente durch radial außenliegende Bereiche der Einzelpolträger gebildet sein.

Bei einem bevorzugten Ausführungsbeispiel stehen die Polsegmente im wesentlichen senkrecht zur Scheibenebene der einzelnen Polträger ab. Dadurch werden entsprechende zahnförmige Vorsprünge gebildet, wobei Vorsprünge unterschiedlicher Einzelpolträger auf Lücke angeordnet sind und ineinander greifen können.

Bei scheibenförmigen Einzelpolträgern ist es von Vorteil, wenn die von der Scheibenebene vorstehenden Polsegmente durch ein radiales Magnetfeld magnetisiert werden.

Um die Herstellung der Polsegmente bei scheibenförmigen Einzelpolträgern zu vereinfachen, ist es weiterhin günstig, wenn die Polsegmente radial verlaufende Segmentwände aufweisen.

Die Herstellung der Einzelpolträger mit entsprechenden Polsegmenten wird weiterhin dadurch vereinfacht, daß die Segmentwände eines jeden Polsegments unter gleichem Mittelpunktswinkel verlaufen. Dadurch werden Polsegmente mit in radialer Richtung zunehmender Breite gebildet. In radialer Richtung können sich die Polsegmente beispielsweise theoretisch entlang des gesamten Radius des scheibenförmigen Einzelpolträgers bis zu dessen Mittelpunkt erstrecken. Bevorzugt und von der Herstellung einfacher erstrecken sich allerdings die Polsegmente vom Scheibenrand nur zwischen etwa einem Drittel und einem Zehntel der Länge des entsprechenden Radius.

Zur Magnetisierung der einzelnen Polsegmente kann in diesem Zusammenhang auch der Einzelpolträger insgesamt radial magnetisiert sein.

Bei Einsatz eines flachen, kammförmigen Einzelpolträgers wird dieser durch ein vertikal zur Kammfläche gerichtetes Magnetfeld magnetisiert. Dabei wird der Einzelpolträger im Durchlaufverfahren durch die entsprechende Magnetisiervorrichtung magnetisiert.

Im einfachsten Fall wird jeder Einzelpolträger mit gleichförmigen und gleich beabstandeten Polsegmenten hergestellt, wobei sowohl den Polsegmenten als auch den zwischen diesen angeordneten Lücken gleiche Mittelpunktswinkel zugeordnet sind.

Nach Zusammenfügen der zumindest zwei Einzelpolträger, können die Polsegmente und die entsprechenden Lücken so ausgebildet sein, daß eine reibschlüssige Verbindung zwischen den beiden Einzelpolträgern gewährleistet ist. Außerdem können die Polsegmente der beiden Einzelpolträger miteinander verbunden werden, was beispielsweise durch Verkleben der entsprechenden Segmentwände geschehen kann. Um dabei Lücken zwischen den Polsegmenten unterschiedlicher Einzelpolträger zu vermeiden und ein formschlüssiges Ineinanderstecken zu ermöglichen, sind die Polsegmente unterschiedlich magnetisierter Einzelpolträger komplementär zueinander ausgebildet.

Um das formschlüssige Ineinanderstecken weiterhin zu verbessern, kann jeder Einzelpolträger Aufnahmevertiefungen zur formschlüssigen Aufnahme von Zahnspitzen der entsprechenden Polsegmente des jeweils anderen Einzelpolträgers aufweisen.

Um den Code-Träger als Drehgeber einsetzen zu können, sind die Einzelpolträger um eine Mittelpunktachse drehbar gelagert. Dabei ist zu beachten, daß die Einzelpolträger auch bis auf die Polsegmente reduzierbar sind, wobei diese zur drehbaren Lagerung beispielsweise direkt auf einer Welle anordbar sind. Dabei weisen die einzelnen Polsegmente mit jeweils einem Magnetpol in Richtung der Welle und mit dem jeweils anderen Pol zum Magnetsensor, wobei entlang der Abtastrichtung die Magnetpole der Polsegmente alternierend angeordnet sind.

Als Material für die Einzelpolträger und insbesondere für die Polsegmente kann ein Material mit hoher Koerzitivfeldstärke verwendet werden. Dabei kann dieses Material auch nur für die Polsegmente verwendet werden, während der Rest des Einzelpolträgers aus einem anderen Material hergestellt ist. Durch die Verwendung eines Materials mit hoher Koerzitivfeldstärke, das heißt eines hartmagnetischen Materials, ist es weiterhin möglich, einen hohen magnetischen Fluß durch den Magnetsensor zu ermöglichen, so daß die Störanfälligkeit gegenüber Fremdfeldern gering ist und gleichzeitig ein die Montage vereinfachender Abtastspalt zwischen Code-Träger und Magnetsensor, das heißt ein relativ großer Spalt, realisierbar ist. In diesem Zusammenhang ist es weiterhin von Vorteil, daß das gesamte Volumen zumindest der Polsegmente vollständig magnetisiert ist. Weiterhin sind beliebige Polteilungen bei dem erfindungsgemäßen Code-Träger durch eine einfache, kostengünstige Magnetisiervorrichtung magnetisierbar, wobei die scheibenförmigen Einzelpolträger für Drehgeber mit einem Stromimpuls und die kammförmigen Einzelpolträger für Längenmeßsysteme im Durchlaufverfahren durch die Magnetisiervorrichtung magnetisierbar sind.

Im folgenden wird ein vorteilhaftes Ausführungsbeispiel der Erfindung anhand der in der Zeichnung beigefügten Figuren näher erläutert und beschrieben.

Es zeigen:
- Figur 1: eine Seitenansicht eines magnetischen Positionsgebers;
- Figur 2: eine Unteransicht entlang Linie II-II eines Einzelpolträgers nach Figur 1;
- Figur 3: eine Draufsicht entlang einer Linie III-III eines Einzelpolträgers nach Figur 1; und
- Figur 4: einen Schnitt entlang der Linien IV-IV aus Figur 2 oder 3.

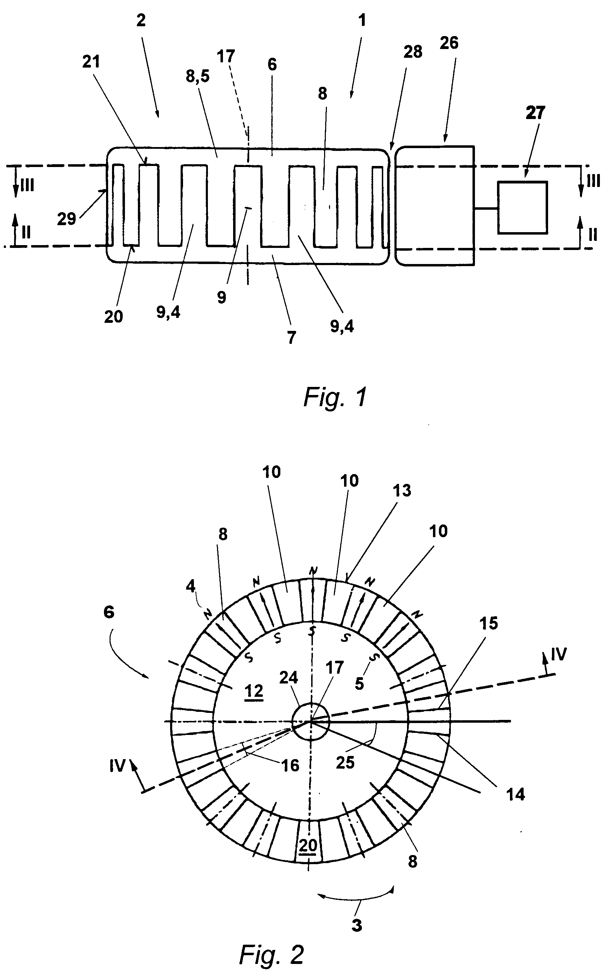

In Figur 1 ist im Prinzip ein magnetischer Positionsgeber 1 mit Code-Träger 2, Magnetsensor 26 und Auswerteelektronik 27 dargestellt.

Der Code-Träger 2 ist topfförmig aus zwei Einzelpolträgern 6 und 7 gebildet, die um eine Mittelpunktachse 17 drehbar gelagert sind. Die Einzelpolträger 6 und 7 sind komplementär zueinander aufgebaut, wobei der obere Einzelpolträger 6 eine Anzahl von nach unten abstehenden Polsegmenten 8 und der untere Einzelpolträger 7 eine Anzahl von nach oben abstehenden Polsegmenten 9 aufweist. Die Polsegmente sind in etwa zahnförmig und haben einen im wesentlichen rechteckförmigen Querschnitt. Die Länge der Polsegmente 8, 9 ist jeweils gleich, wobei jedes Polsegment 8 oder 9 mit entsprechenden Zahnspitzen 20, 21 in Lücken zwischen den anderen Polsegmenten eingreift.

Die Polsegmente 8 des oberen Einzelpolträgers 6 sind auf ihrer einem Außenumfang 29 des Code-Trägers 2 zuweisenden Außenseite mit einem Südpol ausgebildet. Analog sind die Außenseiten der Polsegmente 9 des unteren Einzelpolträgers 7 mit einem Nordpol ausgebildet.

Zwischen dem Außenumfang 29 des Code-Trägers 2 und dem Magnetsensor 26 ist ein Spalt 28 ausgebildet, über den der Magnetsensor 26 dem magnetischen Fluß von einem jeden Polsegment 8, 9 erfaßt. Das in Abhängigkeit von den jeweiligen Nordpol 4 beziehungsweise Südpol 5 alternierende Signal des Magnetsensors 26 wird an die Auswerteelektronik 27 zur Messung der Drehung des Code-Trägers 2 weitergegeben.

In Figur 2 ist eine Unteransicht entlang der Linie II-II auf den oberen Einzelpolträger 6 nach Figur 1 dargestellt.

Die Zahnspitzen 20 der jeweiligen Polsegmente 8 haben in der Figurenebene die Form eines Sektors eines Kreisringes. Jedem Polsegment ist ein gleich großer Mittelpunktswinkel 16 zugeordnet. Dieser weist als Schenkel zwei sich in der Mittelpunktsachse 17 schneidende Radien auf. Insgesamt sind sechzehn Polsegmente 8 mit entsprechend sechzehn zwischen diesen angeordneten Zahnlücken 10 ausgebildet. Entsprechend zur Anzahl der zahnförmigen Polsegmente 8 und der zugehörigen Zahnlücken 10 ist der Mittelpunktswinkel 16 gleich 11,25°, und der Mittelpunktswinkel 25 für zwei benachbarte Polsegmente 8, gemessen bezüglich ihrer radialen Mittellinie, ist 22,5°.

Die zahnförmigen Polsegmente 8 stehen am Scheibenrand 13 von der Scheibenebene 12 des Einzelpolträgers 6 im wesentlichen senkrecht ab. Jedes Polsegment 8 ist in radialer Richtung magnetisiert, wobei entlang des Scheibenrandes 13, beziehungsweise des Außenumfangs 29, siehe Figur 1, die Nordpole (N) 4 und auf den der Mittelpunktsachse 17 konzentrisch umgebenden Achsbohrung 24 zuweisenden Innenseiten der Polsegmente 8 entsprechende Südpole (S) 5 ausgebildet sind.

Alle Polsegmente 8 des Einzelpolträgers 6 sind in gleicher Weise magnetisiert.

In Umfangsrichtung beziehungsweise Abtastrichtung 3 ist jedes Polsegment 8 durch entsprechende Segmentwände 14 und 15 begrenzt, welche in radialer Richtung zur Mittelpunktsachse 17 unter Einschluß des Mittelpunktswinkels 16 verlaufen.

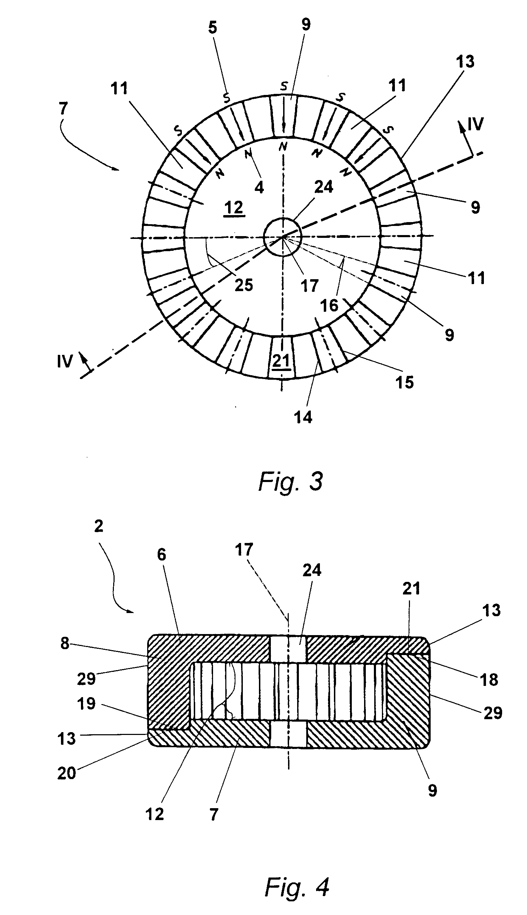

In Figur 3 ist eine zu Figur 2 analoge Draufsicht entlang der Linie III-III auf den unteren Einzelpolträger 7 nach Figur 1 dargestellt.

Der untere Einzelpolträger 7 ist gegenüber dem oberen Einzelpolträger 6 um Mittelpunktsachse 17 um einen Winkel 16, siehe Figur 2, verdreht, so daß beim Zusammenfügen der beiden Einzelpolträger 6 und 7 zur Herstellung des Code-Trägers 2 die entsprechenden Polsegmente 8, 9 ineinander greifen. Entsprechend sind die Polsegmente 9 des unteren Einzelpolträgers 7 ebenfalls um einen Mittelpunktswinkel 25 voneinander beabstandet und weisen eine Breite entsprechend zum Mittelpunktswinkel 16 auf. In gleicher Weise sind die Polsegmente 9 am Scheibenrand 13 ausgebildet und stehen im wesentlichen senkrecht von der Scheibenebene 12 ab.

Im Gegensatz zu den Polsegmenten 8 aus Figur 2 sind die Polsegmente 9 aus Figur 3 in umgekehrter Richtung magnetisiert. Entsprechende Südpole (S) 5 der Polsegmente 9 weisen zum Scheibenrand 3, beziehungsweise zum Außenumfang 29 des Code-Trägers 2, siehe Figur 1. Der Achsbohrung 24 um Mittelpunktsachse 17 sind entsprechend Nordpole (N) 4 zugeordnet.

Alle Polsegmente 8 und 9 beider Einzelpolträger 6 und 7 sind in radialer Richtung mit gleicher Lange ausgebildet und erstrecken sich vom Scheibenrand 13 über eine Länge geringer als der des entsprechenden Radius der scheibenförmigen Einzelpolträger 6, 7 in Richtung Mittelpunktsachse 17. Zwischen den einzelnen Polsegmenten 9 sind wiederum analog zu Figur 2 entsprechende Zahnlücken 11 zur Aufnahme von Polsegmenten 8 nach Figur 2 ausgebildet.

In Figur 4 ist ein Schnitt entlang der Linie IV-IV aus Figuren 2 beziehungsweise 3 bei zum Code-Träger 2 nach Figur 1 zusammengesetzten Einzelpolträgern 6, 7 dargestellt. Gleiche Teile sind mit gleichen Bezugszeichen versehen und werden nur noch teilweise erwähnt.

Die Polsegmente 8, 9 der Einzelpolträger 6, 7 sind in entsprechende Lücken 11, 10 des jeweils anderen Einzelpolträgers formschlüssig eingesetzt. Die Polsegmente 8 weisen am Außenumfang 29 einen Nordpol N und die Polsegmente 9 einen Südpol S auf. Entsprechend sind innerhalb des im wesentlichen topfförmigen Code-Trägers 2 die zugehörigen Südpole S bei Polsegment 8 und Nordpole N bei Polsegment 9 ausgebildet.

Die jeweiligen Polsegmente 8, 9 stehen im wesentlichen senkrecht von der zugehörigen Scheibenebene 12 ab und sind von im jeweils gegenüberliegenden Einzelpolträger 6 beziehungsweise 7 ausgebildeten Aufnahmevertiefungen 18, 19 mit ihren Zahnspitzen 20, 21 aufgenommen. Durch den gleichartigen Aufbau und die gleichen Abmessungen eines jeden Einzelpolträgers 6 oder 7 sind diese entlang des Außenumfangs 29 formbündig ineinander gesetzt, wobei die entsprechenden Polsegmente 8, 9 in die zugehörigen Zahnlücken und die Aufnahmevertiefungen 18, 19 eingreifen.

In den Figuren 1 bis 4 wurde ein Code-Träger 2 dargestellt, der als Drehgeber zur Messung einer Drehung einsetzbar ist. Zur Messung einer einfachen linearen Länge sind analog Code-Träger mit im wesentlichen kammförmigem Aufbau verwendbar. Bei diesen sind die einzelnen Kammzinken durch Polsegmente 8 beziehungsweise 9 gebildet, wobei zwei kammförmige Einzelpolträger mit ihren jeweiligen Polsegmenten ineinander greifen. Entsprechend zu den Figuren 1 bis 4 sind die Polsegmente der beiden kammförmigen Einzelpolträger mit Nord- und Südpolen ausgebildet, wobei die Magnetisierung der einzelnen Polsegmente im wesentlichen vertikal zur Kammebene erfolgt.

Im folgenden wird kurz die Herstellung eines Code-Trägers 2 nach den Figuren 1 bis 4 erläutert.

Die Einzelpolträger 6 und 7 des Code-Trägers 2 sind separat herstellbar. Da beide Einzelpolträger gleich aufgebaut sind, sind sie durch ein Werkzeug, beispielsweise durch Spritzgußtechnik, Sintertechnik, Stanzen oder spanende Bearbeitung herstellbar.

Nach ihrer Herstellung werden die beiden Einzelpolträger 6, 7 entgegengesetzt magnetisiert, wodurch die Polanordnung der Figuren 2 beziehungsweise 3 entsteht. Darauffolgend werden die Einzelpolträger 6, 7 ineinander gesteckt, wobei Polsegmente des einen Einzelpolträgers in Lücken zwischen den Polsegmenten des anderen Einzelpolträgers eingreifen, siehe Figur 1.

Falls zusätzlich zur formschlüssigen Verbindung der Einzelpolträger 6, 7 eine weitere Verbindung erforderlich ist, so können beispielsweise die entsprechenden Segmentwände 14, 15 ineinandergreifender Polsegmente 8, 9 miteinander verbunden werden.

Nach Herstellung eines topfförmigen Code-Trägers nach Figur 1 beziehungsweise 4 ist es weiterhin möglich, die entsprechenden Topfdeckel bildenden Scheiben der Einzelpolträger 6, 7 durch spanende Bearbeitung zu entfernen, wodurch ein nur durch die einzelnen Polsegmente 8, 9 gebildeter, ringförmiger Code-Träger übrig bleibt. Dieser ist beispielsweise auf eine Welle aufsteckbar, die einen Durchmesser entsprechend zum Innenabstand der Polsegmente 8, 9 nach Figur 4 aufweist.

## Patentansprüche

1. Magnetischer Positionsgeber (1) mit einem Code-Träger (2), welcher entlang einer Abtastrichtung (3) abwechselnd aufeinanderfolgende Nord- und Südpole (4, 5) aufweist,
**dadurch gekennzeichnet,**
daß der Code-Träger (2) aus wenigstens zwei zusammengesetzten, entgegengesetzt magnetisierten Einzelpolträgern (6, 7) gebildet ist, von welchen jeder entlang der Abtastrichtung (3) Polsegmente (8, 9) mit gleicher Magnetisierung aufweist, wobei Polsegmente (8, 9) unterschiedlicher Einzelpolträger (6, 7) ineinander greifen.

2. Magnetischer Positionsgeber nach Anspruch 1,
**dadurch gekennzeichnet,**
daß die Polsegmente (8, 9) entgegengesetzt magnetisierter Einzelpolträger (6, 7) komplementär zueinander ausgebildet sind.

3. Magnetischer Positonsgeber nach Anspruch 1 oder 2,
**dadurch gekennzeichnet,**
daß die Polsegmente (8, 9) sich im wesentlichen senkrecht zur Abtastrichtung (3) erstrecken und magnetisiert sind.

4. Magnetischer Positionsgeber nach wenigstens einem der vorangehenden Ansprüche,
**dadurch gekennzeichnet,**
daß die Polsegmente (8, 9) entlang der Abtastrichtung (3) im wesentlichen zahnförmig ausgebildet sind und Polsegmente (8, 9) entgegengesetzt magnetisierter Einzelpolträger (6, 7) auf Lücke (10, 11) angeordnet sind.

5. Magnetischer Positionsgeber nach wenigstens einem der vorangehenden Ansprüche,
**dadurch gekennzeichnet,**
daß die Einzelpolträger (6, 7) kammförmig sind.

6. Magnetischer Positionsgeber nach wenigstens einem der vorangehenden Ansprüche,
**dadurch gekennzeichnet,**
daß die Einzelpolträger (6, 7) scheibenförmig sind und die Polsegmente (8, 9) vom Scheibenrand (13) abstehen.

7. Magnetischer Positionsgeber nach wenigstens einem der vorangehenden Ansprüche,
**dadurch gekennzeichnet,**
daß die Polsegmente (8, 9) im wesentlichen senkrecht zur Scheibenebene (12) abstehen.

8. Magnetischer Positionsgeber nach wenigstens einem der vorangehenden Ansprüche,
**dadurch gekennzeichnet,**
daß die Polsegmente (8, 9) radial verlaufende Segmentwände (14, 15) aufweisen.

9. Magnetischer Positionsgeber nach wenigstens einem der vorangehenden Ansprüche,
**dadurch gekennzeichnet,**
daß die Segmentwände (14, 15) eines jeden Polsegments (8, 9) unter gleichem Mittelpunktswinkel (16) verlaufen.

10. Magnetischer Positionsgeber nach wenigstens einem der vorangehenden Ansprüche,
**dadurch gekennzeichnet,**
daß die Polsegmente (8, 9) der entgegengesetzte magnetisierten Einzelpolträger (6, 7) miteinander verbunden sind.

11. Magnetischer Positionsgeber nach wenigstens einem der vorangehenden Ansprüche,
**dadurch gekennzeichnet,**
daß die Einzelpolträger (6, 7) um eine Mittelpunktsachse (17) drehbar gelagert sind.

12. Magnetischer Positionsgeber nach wenigstens einem der vorangehenden Ansprüche,
**dadurch gekennzeichnet,**
daß die Einzelpolträger (6, 7) radial magnetisiert sind.

13. Magnetischer Positionsgeber nach wenigstens einem der vorangehenden Ansprüche,
**dadurch gekennzeichnet,**
daß jeder Einzelpolträger (6, 7) Aufnahmevertiefungen (18, 19) zur formschlüssigen Aufnahme von Zahnspitzen (20, 21) von Polsegmenten (8, 9) des jeweils anderen Einzelpolträgers (6, 7) aufweist.

14. Magnetischer Positionsgeber nach wenigstens einem der vorangehenden Ansprüche,
**dadurch gekennzeichnet,**
daß das Material für die Einzelpolträger (6, 7) und insbesondere für die Polsegmente (8, 9) eine hohe Koerzitivfeldstärke aufweist.

15. Verfahren zur Herstellung eines magnetischen Positionsgebers (1) mit einem entlang einer Abtastrichtung (3) abwechselnd aufeinanderfolgende Nord- und Südpole (4, 5) aufweisenden Code-Träger (2)
**gekennzeichnet durch**
die folgenden Schritte
i) Herstellen von wenigstens zwei Einzelpolträgern (6, 7) mit entlang der Abtastrichtung (3) beabstandeten Polsegmenten (8, 9);
ii) Magnetisieren zumindest der Polsegmente (8, 9) eines jeden Einzelpolträgers (6, 7) in einer Magnetisiervorrichtung, wobei Polsegmente (8, 9) unterschiedlicher Einzelpolträger (6, 7) entgegengesetzt magnetisiert werden; und
iii) Zusammenfügen der Einzelpolträger (6, 7) zum Code-Träger (2), wobei abwechselnd Polsegmente (8, 9) eines jeden Einzelpolträgers (6, 7) entlang der Abtastrichtung (3) angeordnet sind und ineinander greifen.

16. Verfahren nach Anspruch 15,
**dadurch gekennzeichnet,**
daß im Schritt i) die Einzelpolträger (6, 7) durch Sintertechnik, Spritzgußtechnik, Stanzen oder spanende Bearbeitung hergestellt werden.

17. Verfahren nach Anspruch 15 oder 16,
**dadurch gekennzeichnet,**
daß im Schritt ii) im wesentlichen scheibenförmige Einzelpolträger (6, 7) mit von der Scheibenebene (12) abstehenden Polsegmenten (8, 9) durch ein radiales Magnetfeld magnetisiert werden.

18. Verfahren nach wenigstens einem der Ansprüche 15 bis 17,
**dadurch gekennzeichnet,**
daß im Schritt iii) im wesentlichen flache, kammförmige Einzelpolträger (6, 7) durch ein vertikal zur Kammfläche gerichtetes Magnetfeld magnetisiert werden.

19. Verfahren nach wenigstens einem der Ansprüche 15 bis 18,
**dadurch gekennzeichnet,**
daß im Schritt i) jeder Einzelpolträger (6, 7) mit gleichförmigen und gleichbeabstandeten Polsegmenten (8, 9) hergestellt wird.

20. Verfahren nach wenigstens einem der Ansprüche 15 bis 19,
**dadurch gekennzeichnet,**
daß im Schritt i) komplementär zueinander hergestellte Polsegmente (8, 9) unterschiedlich magnetisierter Einzelpolträger (6, 7) im Schritt iii) formschlüssig ineinander gesteckt werden.
